# EUROPEAN PATENT SPECIFICATION

(11) **EP 0 619 505 B1**
(45) Date of publication and mention of the grant of the patent: **03.11.1999**
(21) Application number: 94301696.4
(22) Date of filing: 10.03.1994
(51) Int. Cl.: G02B 6/32, G02B 6/42

(54) **Optical collimator array and method of aligning light axes thereof**
Optische Kollimatoren-Matrix und Verfahren zur Ausrichtung ihrer Achsen
Réseau de collimateurs optiques et méthode d'alignement de ses axes optiques

(30) Priority: 11.03.1993 JP 5086693; 15.02.1994 JP 1836394
(43) Date of publication of application: 12.10.1994
(73) Proprietor: NGK INSULATORS, LTD., Nagoya City Aichi Pref. (JP)
(72) Inventor: Ota, Takashi, Kasugai City, Aichi Pref. (JP); Fukuyama, Masashi, Nagoya City, Aichi Pref. (JP)
(74) Representative: Paget, Hugh Charles Edward

(56) References cited:
- EP-A- 0 463 390
- EP-A- 0 506 438
- US-A- 5 037 173
- US-A- 5 135 590
- PATENT ABSTRACTS OF JAPAN vol. 017, no. 161 (P-1512), 29 March 1993 & JP-A-04 324406 (FUJITSU LTD), 13 November 1992,
- PATENT ABSTRACTS OF JAPAN vol. 017, no. 706 (E-1483), 22 December 1993 & JP-A-05 243553 (NIPPON TELEGR & TELEPH CORP), 21 September 1993,

## Description

### Background of the Invention

### Field of the Invention

The present invention relates to an optical collimator assembly comprising an optical fiber array, and a microlens array arranged at a predetermined distance from the optical fiber array, and a method of aligning optical axes of the optical collimator assembly.

### Description of the Related Art

Recently, an Exiton Absorption Reflection Switch (EARS) having a signal regeneration function has been described in, for example, TECHNICAL REPORT OF IEICE A-P92-78, SSE92-70 (1992-10) "Experiment digital free-space photonic switch". In this EARS, an optical collimator is used at a light incident portion and a light exit portion thereof. This optical collimator functions to supply light signals emitted through an array of optical fibers into a two-dimensional photonic device as parallel light beams.

The optical collimator assembly comprises an optical fiber array of aligned and fixed optical fibers, and a microlens array arranged near the optical fiber array at a predetermined distance therefrom. In the optical collimator mentioned above, one end portion of the optical fiber array faces one end of the microlens array at a distance substantially equal to a focal length of the microlens array. Therefore, diverging light beams emitted from the optical fiber array are converted into parallel light beams.

As to a manufacturing method of the optical collimator mentioned above, it is assumed that the optical fiber array and the microlens array are arranged on the same substrate and are spaced at a distance substantially equal to a focal length. However, in the manufacturing method mentioned above, it is very difficult to arrange the optical fiber array and the microlens array with a distance substantially equal to a focal length and to make axes of the optical fibers of the optical fiber array coincident with axes of the microlens array. Moreover, in the construction mentioned above, the strength of the optical collimator is lowered and handling of the optical collimator array becomes difficult.

That is to say, in order to align the optical axes in the optical collimator having the construction mentioned above, a light beam is made incident upon one end of the optical fiber array being opposite to an end facing the microlens array, and then a light emitted from the microlens array is picked up by for example CCD camera and is displayed on a monitor. Then, spots of the lights displayed on the monitor are aligned in one direction by moving the optical fiber array and the microlens array relatively. After the spots are aligned in the manner mentioned above, the optical fiber array and the microlens array are connected by using for example adhesives of ultraviolet hardening type.

In the method mentioned above, if a positional relation between the optical fiber array and the microlens array is varied, the spots on the monitor (4 optical fibers in the optical fiber array) are not aligned in one direction as shown in Fig. 15(a), and thus it is understood that the optical fiber array and the microlens array are not arranged properly. However, if the optical fiber array and the microlens array are varied in a thickness direction i.e. parallelly, the spots on the monitor are aligned in one direction i.e. on the line, and thus it is not understood that the optical fiber array and the microlens array are not arranged properly. Therefore, in the latter case, it is not possible to make coincident the optical axes of the optical fibers in the optical fiber array with the optical axes of the microlens in the microlens array, completely.

JPA-4-324 406 describes a method of coupling an optical fiber array and a lens array, in which cruciform masks are arranged on the fiber array, on the centre line of the fibers and an each side of the fiber array, with a spacing from the adjacent fibers corresponding to the fiber pitch. These masks are observed through dumming lenses of the lens array, by means of a microscope, to achieve accurate alignment of the two arrays.

### Summary of the Invention

It is an object of the invention to eliminate the drawbacks mentioned above and to provide an optical collimator array which has a high strength and can arrange an optical fiber array and a collimator array easily with a predetermined distance.

According to the invention, there is provided an optical collimator assembly as set out in claim 1.

Another object of the invention is to provide a method of aligning optical axes of the optical fiber array and optical axes of the microlens array properly in a coincident manner.

According to the invention, there is also provided a method of aligning optical axes of an optical collimator assembly, as set out in claim 7.

In the construction of the collimator assembly of the invention, since the optical fiber array, the spacer, and the microlens array are connected integrally to form the collimator assembly, it is possible to obtain an optical collimator which has high strength and is easy in manufacturing, and thus it is possible to make the handling of the optical collimator array easy. Preferably, the spacer has a recess with window portion having a depth with respect to the face thereof connected to the optical fiber array. Therefore, if the microlens array is set in the recess window portion of the spacer in which one end portion of the microlens array is disposed to the window, and the spacer integrally connected with the microlens array is fixed to the optical fiber array, it is possible to adjust a distance between one end of the optical fiber array and one end of the microlens array at a predetermined distance i.e. a focal length precisely. As a result, it is possible to increase a converting efficiency from diverging lights to parallel lights.

In the method of the invention, at least one set of reference optical fibers are arranged at both sides of the optical fibers in the optical fiber array, and axis adjustment between the optical fibers and the microlenses is performed by reference to a line on the monitor generated between one reference fiber and the other reference fiber. In this case, even if the optical fiber array and the microlens array are varied in a thickness direction i.e. parallelly, the spots on the monitor are not aligned in one direction i.e. on the line, and thus it is understood that the optical fiber array and the microlens array are not arranged properly. Therefore, it is possible to perform an optical axis alignment between the optical fibers and the microlenses precisely in an easy manner.

The invention also provides a method of manufacture of an optical collimator array, in which after the alignment of the optical axes in accordance with the invention, the portions containing the reference optical fibers are cut off.

### Brief Description of the Drawings

Fig. 1 is a schematic view showing an optical collimator array produced by a method according to the invention,
Fig. 2 is a schematic view illustrating an optical fiber array used in a method of the invention,
Figs.3a to 3c are schematic views respectively depicting one embodiment of a spacer used in a method of the invention,
Fig. 4 is a schematic view showing another embodiment of a spacer used in a method of the invention,
Fig. 5 is a schematic view illustrating another optical collimator array produced by a method according to the invention,
Fig. 6 is a schematic view explaining a method of aligning optical axes between the optical fibers and the microlenses in an assembly according to the invention,
Fig. 7 is a schematic view depicting a monitor image,
Fig. 8 is a schematic view showing another embodiment of a spacer used in a method of the invention,
Fig. 9 is a schematic view illustrating an embodiment of a part of the optical fiber collimator assembly according to the invention,
Fig. 10 is a schematic view depicting one embodiment of a combination of the microlens array and the spacer,
Fig. 11 is a schematic view showing another embodiment of the microlens array,
Fig. 12 is a schematic view illustrating another embodiment of the optical collimator assembly according to the invention,
Fig. 13 is a schematic view depicting another optical collimator array produced by a method according to the invention,
Fig. 14 is a schematic view showing another monitor image, and
Figs. 15a and 15b are schematic views for explaining drawbacks of a conventional optical collimator array.

### Description of the Preferred Embodiments

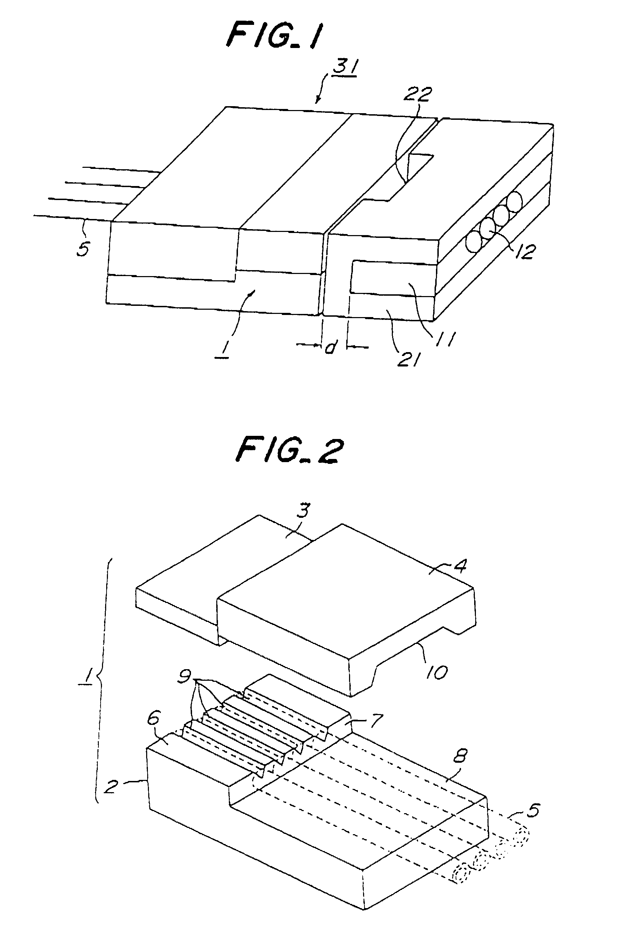

Fig. 1 is a schematic view showing an optical collimator array produced in accordance with the invention. The collimator array shown in Fig. 1 has an optical fiber array in which a plurality of optical fibers 5 are aligned in one direction in an assembly 1. In this array, four optical fibers 5 are used. Moreover, a microlens array 11 is formed by integrally arranging a plurality of GRIN (Gradient Index) lenses 12 in one direction, the number of lenses 12 corresponding to the number of the optical fibers in the optical fiber array. Further, there is a spacer 21 for fixing the microlens array 11. The microlens array 11 is fixed to the spacer 21 in such a manner that one end of the microlens array 11 is disposed at a recess portion 22 of the spacer 21. Then, an optical collimator array 31 is obtained by connecting the spacer 21 to the optical fiber assembly 1 in such a manner that light axes at the ends of the optical fibers 5 of the optical fiber array are made coincident with those of GRIN lenses 12 of the microlens array 11 disposed at the recess portion 22.

As to the optical fiber assembly 1, it is preferred to use an optical fiber array disclosed in U.S. Patent Application US-A-5,379,360 published 3 Jan 1995. Fig. 2 is a schematic view showing the optical fiber assembly 1 mentioned above. The optical fiber assembly 1 comprises a V groove substrate 2, a fiber fix substrate 3 and upper substrate 4, and a predetermined number of optical fibers 5 (in this case, four optical fibers 5) are fixed in the optical fiber assembly 1. The V groove substrate 2 comprises an upper plane 6 and a lower plane 8 connected to the upper plane 6 via a step 7. In the upper plane 6, V grooves 9 for accommodating the stripped optical fibers 5 one by one are formed. The fiber fix substrate 3 is arranged on the upper plane 6 of the V groove substrate 2, and is used for fixing the stripped optical fibers 5 in the center of each V groove 9. The upper substrate 4 is arranged on the lower plane 8 of the V groove substrate 2. In a lower portion of the upper substrate 4, a recess portion 10 is formed for accommodating cover portions of the optical fibers 5.

The microlens array 11 having a predetermined number of the GRIN lenses 12 is formed by cutting an array of GRIN lenses 12 arranged one dimensionally or two dimensionally, which can be obtained on the market. In this case, the spacing pitch of the GRIN lenses 12 is completely equal to the pitch of the optical fibers 5. Moreover, it is not necessary that the GRIN lens 12 of the microlens array 11 are arranged in a portion disposed at a window of the recess portion 22.

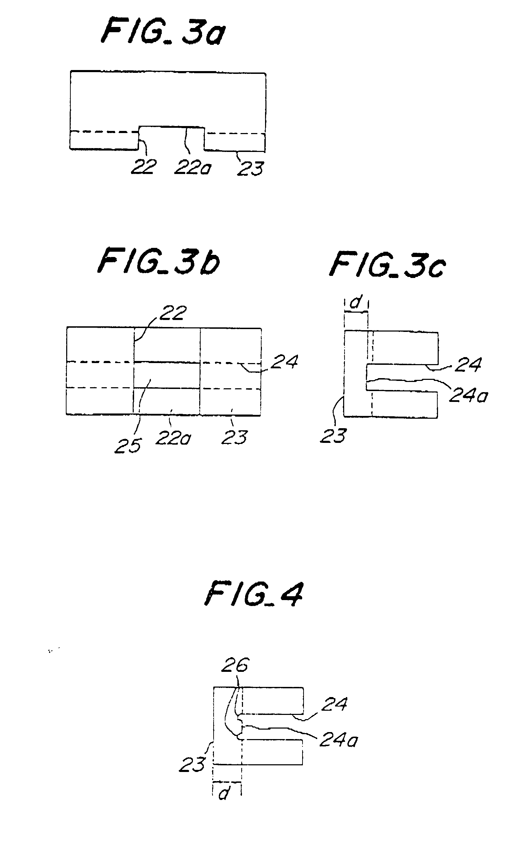

Figs. 3a to 3c are schematic views showing one embodiment of the spacer 21. In this embodiment, the spacer 21 comprises a connection face 23 used for a connection with the optical fiber assembly 1, an accommodating portion 24 formed by a recess extending perpendicularly to the connection face 23 and parallel to the optical fiber array, and the recess portion 22 formed by another recess extending perpendicularly to the connection face 23 and perpendicularly to the optical fiber array in the opposite side of the recess for the accommodating portion. Moreover, a bottom portion 24a cf the accommodating portion 24 intersects a bottom portion 22a of the recess portion 22 to form a window portion 25 through which light beams are transmitted.

In this case in which the recess portion 22 is formed by a space only, the distance d between the connection face 23 and the bottom portion 24a of the accommodating portion 24 is set to the focal length of the GRIN lens 12 of the microlens array 11. This is because, after the optical collimator array 31 is assembled as shown in Fig. 1, the distance between the end of the GRIN lens 12 and the end of the optical fiber 5 can be the focal length of the GRIN lens 12 completely. For example, the dimensions of the optical fiber array are 5X5x2mm³, and the dimensions of the spacer 21 are 5X2X2mm³. Moreover, the focal length of the microlens array 11 is for example 600 µm.

Fig. 4 is a schematic view showing another embodiment of the spacer 21 corresponding to the embodiment illustrated in Fig. 3c. In the spacer shown in Fig. 4, in addition to the spacer illustrated in Fig. 3c, grooves 26 toward the connection face 23 are arranged in both side portions of the bottom portion 24a of the accommodating portion 24. Therefore, the two end portions of the bottom portion 24a are not a right angle, but have an "R" shape as shown in Fig. 4. As a result, it is possible to eliminate the drawback that the distance d can not be set to the focal length completely when the microlens array 11 is mounted on the accommodating portion 24, and thus it is always possible to set the distance d between the end of the microlens array 11 and the connection face 23 to the focal length precisely.

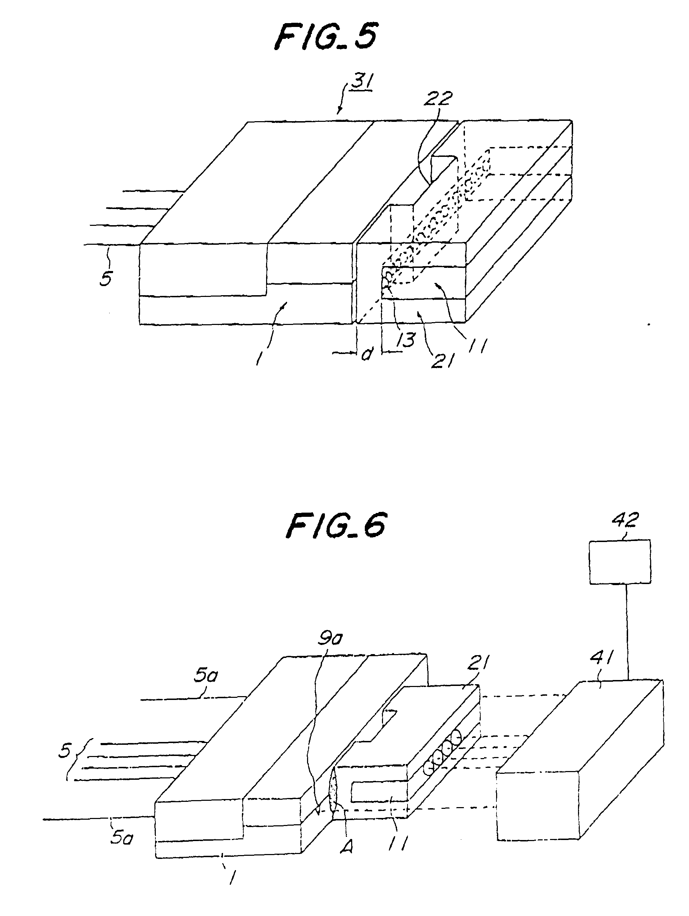

In the optical collimator array described above, if a precise working operation is performed with respect to the spacer 21 only in such a manner that the distance between the bottom portion 24a and the connection face 23 is set to the predetermined distance i.e. the focal length, it is easy to assemble the optical collimator array 31 in which the distance between the optical fiber array 1 and the microlens array 11 is set to the focal length precisely. Fig. 5 is a schematic view showing another optical collimator array 31 produced by a method according to the invention. In the collimator array shown in Fig. 5, microlenses 13 are arranged at a portion of the microlens array 11 disposed in the window portion in stead of the GRIN lenses 12.

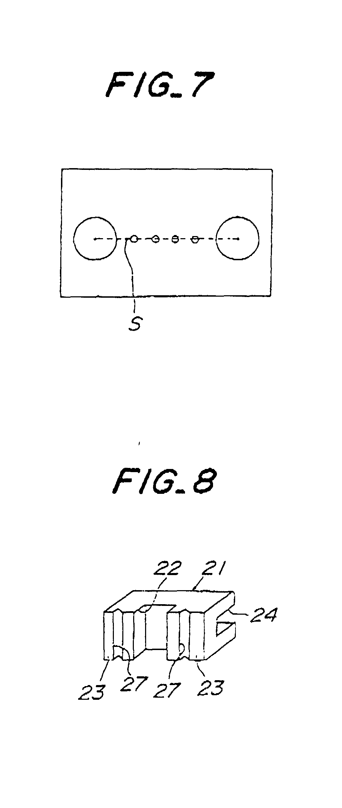

Fig. 6 is a schematic view explaining the method of aligning optical axes when assembling the optical collimator array by the method according to the invention, and Fig. 7 is a schematic view illustrating a monitor image picked up by a CCD camera during the aligning operation. At first, an optical fiber assembly 1 for an alignment having extended portions at both side portions of the final shape of assembly 1 optical fiber is prepared. In the extended portions, V grooves 9a are formed parallel to the V grooves 9, and reference optical fibers 5a are arranged in the V grooves 9a. In this manner, there is made the optical fiber alignment assembly having the reference optical fibers 5a arranged on the same plane as the optical fibers 5. In the optical fiber alignment assembly, the V grooves 9a are positioned outside of the spacer 21 and a portion affected by a protruding adhesive portion A shown in Fig. 6. Then, the spacer 21 accommodating the microlens array 11 is connected to the optical fiber alignment assembly thus obtained. Next, the light axis adjustment when the above connecting operation is performed will be explained.

At first, a light beam is made incident upon the optical fibers 5 consisting of the optical fiber array 1 and also upon the reference optical fibers 5a. Then, light beams emitted from the GRIN lenses 12 of the microlens array 11 via the optical fibers 5 and light beams emitted directly from the reference optical fibers 5a are picked up by a CCD camera 41. The picked up light beams are displayed on a monitor 42 as light spots as shown in Fig. 7. Then, centers in the light spots generated by the light beams from the reference optical fibers 5a are detected, and the thus obtained centers are connected by a reference line S on the monitor 42. After that, a positional relation between the optical fiber assembly 1 and the spacer 21 is adjusted in such a manner that all the light spots generated by the light beams from the optical fibers 5 are positioned on the reference line S. Then, the spacer 21 is fixed to the optical fiber assembly 1 by using for example adhesives of ultraviolet hardening type.

Fig. 8 is a schematic view showing another embodiment of the spacer 21 preferably used for the optical axis alignment according to the invention. In the spacer 21 shown in Fig. 8, the whole dimension of the spacer 21 is decreased, and adhesive relief recesses 27 are arranged in the connection face 23. If the spacer 21 having the construction mentioned above is used, it is possible to eliminate the protruding adhesive portion A in Fig. 6, and to make the spacing of the reference optical fiber 5a small since the spacer 21 has a small dimension. In this case, if an image pickup region of the CCD camera 41 is small, it is possible to detect the reference light spots.

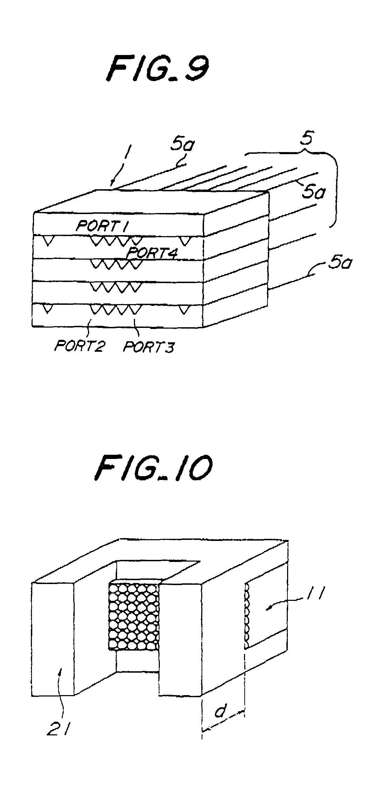

Fig. 9 is a schematic view showing another embodiment of the optical fiber array with additional reference fibers 5a used in the invention, and Fig. 10 is a schematic view illustrating one combination of the microlens array 11 and the spacer 21. In the embodiments shown in Figs. 9 and 10, the difference from the embodiments shown in the previous figures is that a two-dimensional optical fiber array is used. That is to say, the optical fibers 5 are aligned in the horizontal direction and also aligned in the vertical direction.

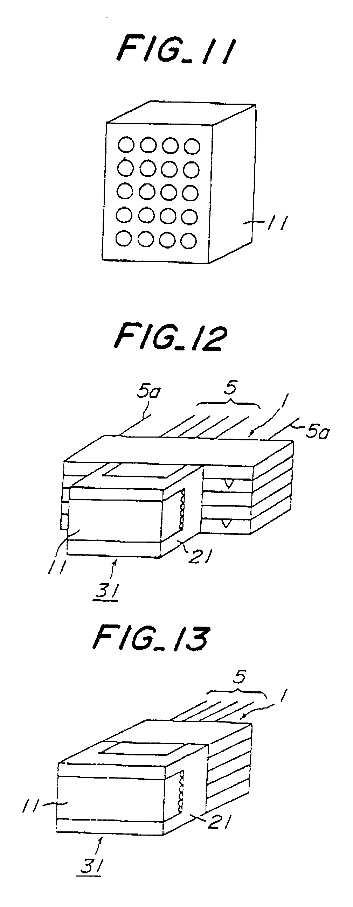

In the embodiment shown in Fig. 9, four V groove substrates each having four optical fibers 5 in the horizontal direction are stacked, and the reference optical fibers 5a are arranged at both side portions of the uppermost V groove substrate and the lowermost V groove substrate. The microlens array 11 and the spacer 21 used in Fig. 9 are the substantially same constructions as those of the previous embodiments, and, as shown in Fig. 10, they have dimensions extending in the vertical direction by the number of the V groove substrates to be used. Therefore, as to the microlens array 11, it is necessary to use the two-dimensional microlens array as shown in Fig. 11.

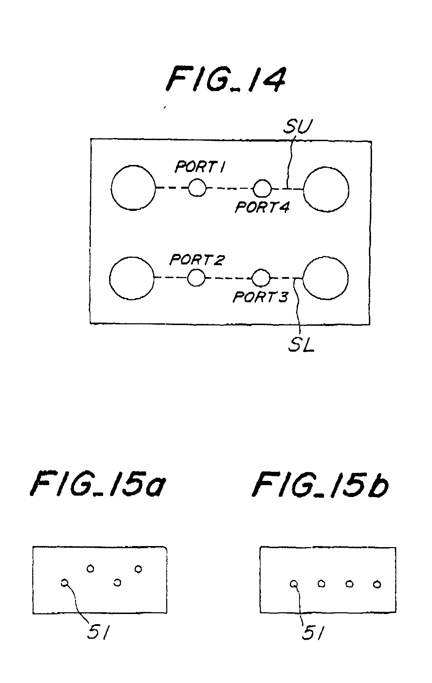

Fig. 12 is a schematic view showing another embodiment of the optical collimator assembly according to the invention. In Fig.12, the optical fiber assembly 1 shown in Fig. 9 and the microlens array 11 and the spacer 12 shown in Fig. 10 are combined to form the optical collimator assembly 31 having the portions including the reference optical fibers 5a. Moreover, in Fig. 13, the optical collimator array 31, in which the portions arranging the reference optical fibers 5a are cut off after the optical axis alignment is finished, is shown. The optical collimator arrays 31 shown in Figs.9 and 10 have fundamentally same constructions as those of the one-dimensional optical collimator arrays mentioned above.

In the two-dimensional optical collimator arrays 31 shown in Figs.9 to 13, the optical axis alignment is performed fundamentally in the same manner as those of the one-dimensional optical collimator arrays mentioned above. Also in the two-dimensional optical collimator arrays 31, it is sufficient to arrange at least one set of the reference optical fibers 5 at both side portions of at least one V groove substrate consisting of the two-dimensional optical fiber assembly 1. However, it is preferred to arrange two sets of the reference optical fibers 5 at both side portions of the uppermost V groove substrate and the lowermost V groove substrate.

At first, a light beam is made incident upon the optical fibers 5 only at the positions marked by PORT1-PORT4 in Fig. 9 and also upon the reference optical fibers 5a. Then, light beams emitted from the microlens array 11 via the optical fibers 5 and light beams emitted directly from the reference optical fibers 5a are picked up by a CCD camera 41. The picked up light beams are displayed on a monitor 42 as light spots as shown in Fig. 14. Then, centers in the light spots generated by the light beams from each set of the reference optical fibers 5a are detected, and the thus obtained centers of each set are connected by reference lines SU and SL on the monitor 42. After that, a positional relation between the optical fiber assembly 1 and the spacer 21 is adjusted in such a manner that (1) the light spots PORT1 and PORT4; and PORT2 and PORT3 are positioned on the reference lines SU and SL, and (2) the light spots PORT1 and PORT4 are vertically coincident with the light spots PORT2 and PORT3, respectively. Then, the spacer 21 is fixed to the optical fiber assembly 1 by using for example adhesives of ultraviolet hardening type. It should be noted that a light beam may be made incident upon all the optical fibers 5. Moreover, since it is necessary to form the two-dimensional optical fiber assembly 1 precisely, it is preferred to form the optical fiber assembly 1 in the manner disclosed in U.S Patent Application US-A-5,379,361 published 3 Jan 1995 or in Japanese Publication No. JP-A-6-265 736 published 10 Mar 1993.

The present invention is not limited to the embodiments mentioned above, but various modifications are possible. For example, in the embodiment mentioned above, the recess portion 22 is a space. However, if only an optical distance between the microlens array 11 and the optical fiber assembly 1 is always set to a predetermined distance i.e. a focal length, an optical member may be inserted into the recess portion 22.

As clearly understood from the above, in the optical collimator array produced according to the invention, since the optical fiber array, the spacer, and the microlens array are connected integrally to form the collimator array, it is possible to obtain an optical collimator array having a high strength which is easy to manufacture. Moreover, the spacer has a recess with window portion having a depth with respect to the face thereof connected to the optical fiber array. Therefore, if the microlens array is set in the recess window portion of the spacer in which one end portion of the microlens array is disposed to the window, and the spacer integrally connected with the microlens array is fixed to the optical fiber array, it is possible to adjust the distance between one end of the optical fiber array and one end of the microlens array to a predetermined distance, i.e. the focal length, precisely. As a result, it is possible to increase conversion efficiency from diverging light beams to parallel light beams.

Moreover, according to the method of aligning optical axes in the collimator array mentioned above, at least one set of reference optical fibers are arranged at both side portions of the optical fibers in the optical fiber array, and axis adjustment between the optical fibers and the microlenses are performed by referring to a line on the monitor generated between one reference fiber and the other reference fiber. In this case, even if the optical fiber array and the microlens array are varied in a thickness direction i.e. parallelly, the spots on the monitor are not aligned in one direction i.e. on the line, and thus it is understood that the optical fiber array and the microlens array are not arranged properly. Therefore, it is possible to perform an optical axis alignment between the optical fibers and the microlenses precisely in an easy manner.

## Claims

1. An optical collimator assembly having an optical fiber array (1) in which a plurality of optical fibers (5) are in fixed positions relative to each other and are aligned with their optical axes in a common plane, and a microlens array (11) in which a plurality of lenses (12) are arranged in fixed positions relative to each other, said microlens array being connected to said optical fiber array at a predetermined distance therefrom, there being a spacer (21) locating said microlens array relative to said optical fiber array, the respective optical axes at the ends of said optical fibers in said optical fiber array being coincident with those of the respective lenses in said microlens array, characterised in that reference optical fibers (5a) are arranged at both sides of said optical fiber array and in the same plane as said optical fibers (5) whose optical axes are coincident with the optical axes of said lenses (12), said reference optical fibers (5a) being located laterally with respect to the location of said lenses (12) of the microlens array, so that light beams emitted by said reference fibers (12) can be detected directly without passing through said lenses (12).

2. An optical collimator assembly according to claim 1, wherein said spacer (21) comprises a connection face (23) making a connection with said optical fiber array and perpendicular to said common plane of the optical axes of the fibers, a first recess (24) in a rear face of said spacer (21) opposite to said connection face, said first recess having its depth direction extending perpendicularly to said connection face and a length direction parallel to said common plane of the axes of the fibers, and a second recess (22) in said connection face having a length direction extending parallel to said connection face (23) and its depth direction parallel to said common plane of the axes of the fibers, wherein a bottom portion of said first recess intersects a bottom portion of said second recess to form a window portion through which light beams are transmitted, between said optical fibers and said lenses.

3. An optical collimator assembly according to claim 2, wherein said microlens array is fixed in said first recess with one end of said lenses of said microlens array is disposed at said window portion.

4. An optical collimator assembly according to claim 2 or 3, wherein said spacer comprises grooves (26) in both side regions of said bottom portion (24a) of said first recess (24).

5. An optical collimator array according to claim 2, 3 or 4, wherein said spacer comprises adhesive relief recesses (27) arranged in said connection face.

6. An optical collimator assembly according to any one of claims 1 to 5, wherein said optical fibers of said fiber array whose optical axes are aligned in a common plane are part of a two dimensional array of optical fibers.

7. A method of aligning an optical collimator assembly having an optical fiber array (1) in which a plurality of optical fibers (5) are in fixed positions relative to each other and are aligned with their optical axes in a common plane, and a microlens array (11) in which a plurality of lenses (12) are arranged in fixed positions relative to each other, said microlens array (11) being connected to said optical fiber array at a predetermined distance therefrom, the method comprising the steps of:-
(i) arranging reference optical fibers (5a) at both sides of and in the same plane as said optical fibers (5) of said optical fiber array;
(ii) passing light beams through said optical fibers and said reference optical fibers;
(iii) detecting light beams emitted by said lenses (12) from said optical fibers (5) of said optical fiber array, and detecting light beams emitted directly from said reference optical fibers (5a) which do not pass through said lenses (12);
(iv) displaying said detected light beams as light spots on a monitor so as to show the position relationship of the detected light beams; and
v) adjusting the positional relationship between said optical fiber array and said microlens array so that the light spots from said microlens array lie on a reference line between the centers of the light spots from said reference optical fibers (5a).

8. A method according to claim 7 wherein said optical fibers of said optical fiber array whose axes are aligned in a common plane are part of a two dimensional array of optical fibers.

9. A method of manufacture of an optical collimator array, including performing the method of alignment according to claim 7 or claim 8, wherein after the alignment steps the reference optical fibres (5a) are cut off.

## Patentansprüche

1. Optische Kollimatoranordnung, umfassend eine optische Faseranordnung, bei der sich eine Vielzahl optischer Fasern (5) in fixen Positionen in bezug aufeinander befinden und mit ihren optischen Achsen in einer gemeinsamen Ebene ausgerichtet sind, sowie eine Mikrolinsenanordnung (11), bei der eine Vielzahl von Linsen (12) in fixen Positionen in bezug aufeinander angeordnet sind, wobei die Mikrolinsenanordnung in einem vorbestimmten Abstand davon mit der optischen Faseranordnung verbunden ist, wobei ein Abstandshalter (21) vorhanden ist, der die Mikrolinsenanordnung in bezug auf die optische Faseranordnung positioniert, wobei die jeweiligen optischen Achsen an den Enden der optischen Fasern in der optischen Faseranordnung mit jenen der jeweiligen Linsen in der Mikrolinsenanordnung zusammenfallen, dadurch gekennzeichnet, daß optische Bezugsfasern (5a) an beiden Seiten der optischen Faseranordnung und in der gleichen Ebene wie die optischen Fasern (5) angeordnet sind, deren optische Achsen mit den optischen Achsen der Linsen (12) zusammenfallen, wobei die optischen Bezugsfasern (5a) in bezug auf die Position der Linsen (12) der Mikrolinsenanordnung seitlich angeordnet sind, so daß die von den Bezugsfasern (5a) ausgesandten Lichtstrahlen direkt detektiert werden können, ohne durch die Linsen (12) hindurchzugehen.

2. Optische Kollimatoranordnung nach Anspruch 1, worin der Abstandshalter (21) folgendes umfaßt: eine Verbindungsfläche (23), die eine Verbindung mit der optischen Faseranordnung herstellt und im rechten Winkel zur gemeinsamen Ebene der optischen Achsen der Fasern steht, eine erste Ausnehmung (24) in einer Rückseite des Abstandshalters (21) gegenüber der Verbindungsfläche, wobei die Tiefenrichtung der ersten Ausnehmung im rechten Winkel zur Verbindungsfläche und ihre Längsrichtung parallel zur gemeinsamen Ebene der Achsen der Fasern verläuft, sowie eine zweite Ausnehmung (22) in der Verbindungsfläche, deren Längsrichtung parallel zur Verbindungsfläche (23) und deren Tiefenrichtung parallel zur gemeinsamen Ebene der Achsen der Fasern verläuft, worin ein Bodenabschnitt der ersten Ausnehmung einen Bodenabschnitt der zweiten Ausnehmung schneidet, so daß sie einen Fensterabschnitt bilden, durch den Lichtstrahlen zwischen den optischen Fasern und den Linsen übertragen werden.

3. Optische Kollimatoranordnung nach Anspruch 2, worin die Mikrolinsenanordnung in der ersten Ausnehmung fixiert ist, wobei ein Ende der Linsen der Mikrolinsenanordnung am Fensterabschnitt angeordnet ist.

4. Optische Kollimatoranordnung nach Anspruch 2 oder 3, worin der Abstandshalter Rillen (26) in beiden Seitenbereichen des Bodenabschnitts (24a) der ersten Ausnehmung (24) umfaßt.

5. Optische Kollimatoranordnung nach Anspruch 2, 3 oder 4, worin der Abstandshalter in der Verbindungsfläche angeordnete Kleberablöseausnehmungen (27) umfaßt.

6. Optische Kollimatoranordnung nach einem der Ansprüche 1 bis 5, worin die optischen Fasern der Faseranordnung, deren optische Achsen in einer gemeinsamen Ebene ausgerichtet sind, Teil einer zweidimensionalen Anordnung optischer Fasern sind.

7. Verfahren zur Ausrichtung einer optischen Kollimatoranordnung, die eine optische Faseranordnung aufweist, in der sich eine Vielzahl optischer Fasern (5) in fixen Positionen relativ zueinander befinden und so ausgerichtet sind, daß ihre Achsen in einer gemeinsamen Ebene liegen, sowie eine Mikrolinsenanordnung (11), bei der eine Vielzahl von Linsen (12) in fixen Positionen zueinander angeordnet sind, wobei die Mikrolinsenanordnung (11) in einem vorbestimmten Abstand davon mit der optischen Faseranordnung verbunden ist, wobei das Verfahren folgende Schritte umfaßt:
(i) das Anordnen optischer Bezugsfasern (5a) an beiden Seiten der und in der gleichen Ebene wie die optischen Fasern (5) der optischen Faseranordnung;
(ii) das Hindurchleiten von Lichtstrahlen durch die optischen Fasern und die optischen Bezugsfasern;
(iii) das Detektieren von Lichtstrahlen, die von den Linsen (12) aus den optischen Fasern (5) der optischen Faseranordnung ausgesandt werden, und das Detektieren von direkt aus den optischen Bezugsfasern (5a) ausgesandten Lichtstrahlen, die nicht durch die Linsen (12) hindurchgehen;
(iv) das Anzeigen der detektierten Lichtstrahlen als Lichtpunkte auf einem Monitor, um die Positionsbeziehung der detektierten Lichtstrahlen zu zeigen; und
(v) das Einstellen der Positionsbeziehung zwischen der optischen Faseranordnung und der Mikrolinsenanordnung, so daß die Lichtpunkte aus der Mikrolinsenanordnung auf einer Bezugslinie zwischen den Mittelpunkten der Lichtpunkte aus den optischen Bezugsfasern (5a) liegen.

8. Verfahren nach Anspruch 7, worin die optischen Fasern der optischen Faseranordnung, deren Achsen in einer gemeinsamen Ebene ausgerichtet sind, Teil einer zweidimensionalen Anordnung aus optischen Fasern sind.

9. Verfahren zur Herstellung einer optischen Kollimatoranordnung, umfassend die Durchführung des Verfahrens zur Ausrichtung nach Anspruch 7 oder 8, worin nach den Ausrichtungsschritten die optischen Bezugsfasern (5a) weggeschnitten werden.

## Revendications

1. Ensemble de collimateurs optiques ayant une rangée de fibres optiques, où plusieurs fibres optiques (5) sont dans des positions fixes les unes par rapport aux autres et sont alignées avec leurs axes optiques dans un plan commun, et une rangée de micro-lentilles (11) où plusieurs lentilles (12) sont disposées dans des positions fixes les unes par rapport aux autres, ladite rangée de micro-lentilles étant connectée à ladite rangée de fibres optiques à une distance prédéterminée de celle-ci, un élément d'espacement (21) étant prévu localisant ladite rangée de micro-lentilles par rapport à ladite rangée de fibres optiques, les axes optiques respectifs aux extrémités desdites fibres optiques dans ladite rangée de fibres optiques coïncidant avec ceux des lentilles respectives dans ladite rangée de micro-lentilles, caractérisé en ce que des fibres optiques de référence (5a) sont agencées aux deux côtés de ladite rangée de fibres optiques et dans le même plan que lesdites fibres optiques (5) dont les axes optiques coïncident avec les axes optiques desdites lentilles (12), lesdites fibres optiques de référence (5a) étant localisées latéralement par rapport à la localisation desdites lentilles (12) de la rangée de micro-lentilles de telle sorte que des faisceaux de lumière émis par lesdites fibres de référence (12) peuvent être détectés directement sans passer à travers lesdites lentilles (12).

2. Ensemble de collimateurs optiques selon la revendication 1, où ledit élément d'écartement (21) comprend une face de connexion (23) établissant une connexion avec ladite rangée de fibres optiques et perpendiculaire audit plan commun des axes optiques des fibres, un premier évidement (24) dans une face arrière dudit élément d'écartement (21) opposé à ladite face de connexion, ledit premier évidement ayant sa direction en profondeur perpendiculairement à ladite face de connexion et une direction en longueur parallèle audit plan commun des axes des fibres, et un deuxième évidement (22) dans ladite face de connexion ayant une direction en longueur s'étendant parallèlement à ladite face de connexion (23) et sa direction en profondeur parallèle audit plan commun des axes des fibres, où une portion de fond dudit premier évidement se croise avec une portion de fond dudit deuxième évidement pour former une portion de fenêtre à travers laquelle des faisceaux de lumière sont transmis, entre lesdites fibres optiques et lesdites lentilles.

3. Ensemble de collimateurs optiques selon la revendication 2, où ladite rangée de micro-lentilles est fixée dans ledit premier évidement, une extrémité desdites lentilles de ladite rangée de micro-lentilles étant disposée à ladite portion de fenêtre.

4. Ensemble de collimateurs optiques selon la revendication 2 ou 3, où ledit élément d'écartement comprend des rainures (26) dans les deux régions latérales de ladite portion de fond (24a) dudit premier évidement (24).

5. Ensemble de collimateurs optiques selon la revendication 2, 3 ou 4, où ledit élément d'écartement comprend des évidements de dégagement de colle (27) agencés dans ladite face de connexion.

6. Ensemble de collimateurs optiques selon l'une des revendications 1 à 5, où lesdites fibres optiques de ladite rangée de fibres dont les axes optiques sont alignés dans un plan commun font partie d'une rangée bidimensionnelle de fibres optiques.

7. Procédé d'alignement d'un ensemble de collimateurs optiques ayant une rangée de fibres optiques dans laquelle plusieurs fibres optiques (5) sont dans des positions fixes les unes par rapport aux autres et sont alignées avec leurs axes dans un plan commun, et une rangée de micro-lentilles (11) où plusieurs lentilles (12) sont agencées dans des positions fixes les unes par rapport aux autres, ladite rangée de micro-lentilles (11) étant connectée à ladite rangée de fibres optiques à une distance prédéterminée de celle-ci, le procédé comprenant les étapes consistant à :
(i) agencer des fibres optiques de référence (5a) aux deux côté du et dans le même plan que lesdites fibres optiques (5) de ladite rangée de fibres optiques ;
(ii) faire passer des faisceaux de lumière à travers lesdites fibres optiques et lesdites fibres optiques de référence ;
(iii) détecter des faisceaux de lumière émis par lesdites lentilles (12) par lesdites fibres optiques (5) de ladite rangée de fibres optiques, et détecter des faisceaux de lumière émis directement par lesdites fibres optiques de référence (5a) qui ne passent pas à travers lesdites lentilles (12) ;
(iv) afficher lesdits faisceaux de lumière détectés sous forme de points lumineux sur un écran de manière à représenter la relation positionnelle des faisceaux de lumière détectés ; et
(v) régler la relation positionnelle entre ladite rangée de fibres optiques et ladite rangée de micro-lentilles de telle sorte que les points lumineux de ladite rangée de micro-lentilles se situent sur une ligne de référence entre les centres des points lumineux desdites fibres optiques de référence (5a).

8. Procédé selon la revendication 7, où lesdites fibres optiques de ladite rangée de fibres optiques dont les axes sont alignés dans un plan commun font partie d'une rangée bidimensionnelle de fibres optiques.

9. Procédé de fabrication d'une rangée de collimateurs optiques, incluant l'exécution du procédé d'alignement selon la revendication 7 ou la revendication 8, où après les étapes d'alignement, les fibres optiques de référence (5a) sont découpées.
